# FASCICULE DE BREVET EUROPEEN

(11) **EP 3 297 913 B1**
(45) Date de publication et mention de la délivrance du brevet: **03.07.2019**
(21) Numéro de dépôt: 16730448.4
(22) Date de dépôt: 11.05.2016
(51) Int. Cl.: B64C 33/02, A63H 27/00, A63H 29/22

(54) **DISPOSITIF MOTORISE AVEC MOUVEMENT ALTERNATIF D'ORGANE DE LOCOMOTION ET PROCÉDÉ DE PILOTAGE ASSOCIE**
MOTORISIERTE VORRICHTUNG MIT HIN- UND HERBEWEGUNG EINES FORTBEWEGUNGSELEMENTS UND ZUGEHÖRIGES STEUERUNGSVERFAHREN
MOTORISED DEVICE WITH RECIPROCATING MOTION OF A LOCOMOTION MEMBER AND ASSOCIATED CONTROL METHOD

(30) Priorité: 19.05.2015 FR 1554473
(43) Date de publication de la demande: 28.03.2018
(73) Titulaire: Office National d'Etudes et de Recherches Aérospatiales, 91120 Palaiseau (FR)
(72) Inventeur: ROGNANT, Mathieu, 31560 Calmont (FR); LE MOING, Thierry, 31650 Saint Orens de Gameville (FR)
(74) Mandataire: Novagraaf Technologies
(86) Numéro de dépôt international: PCT/FR2016/051103
(87) Numéro de publication internationale: WO 2016/185114

(56) Documents cités:
- JP-A- 2009 178 592
- US-A1- 2002 117 583
- US-A1- 2004 195 436
- US-A1- 2013 320 133
- US-A1- 2014 061 379
- US-A1- 2014 158 821
- US-A1- 2014 162 524

## Description

### Domaine technique

La présente invention relève du domaine technique des drones, plus particulièrement celui des micro-drones à ailes battantes capables de vol stationnaire et des mécanismes d'actionnement permettant ces vols stationnaires.

### Etat de l'art

Plusieurs microdrones à ailes battantes ont été proposés dans l'état de l'art. On peut par exemple citer les documents US2013/320133A1, US2014/061379 A1, US2014/162524 A1, US2014/158821 A1, US2004/195436 A1, US2002/117583 A1, JP2009178592 A.

Pour plusieurs d'entre eux des mécanismes d'actionnement ont été développés afin de permettre un vol stationnaire.

Il a notamment été proposé des microdrones volants avec des mécanismes résonnants actionnant une paire d'ailes battantes de ce microdrone. Ces mécanismes utilisent deux moteurs à courant continu et présentant chacun un axe de rotor sur lequel l'une des ailes est directement fixée. Pour chaque moteur, un ressort à spire est relié d'un côté à une aile et de l'autre au corps du moteur. Chaque moteur est sous-alimenté pour faire battre les ailes à la fréquence de résonance du système mécanique entrainé par ce moteur, en particulier l'aile et le ressort reliés à ce moteur.

L'avantage d'un tel mécanisme est qu'il permet de contrôler le tangage et le roulis par le seul contrôle de l'amplitude du mouvement de battement. Cela permet donc de diminuer le nombre d'actionneurs comparé à des systèmes qui utilisent la déformation et l'orientation spécifique des ailes pour contrôler le tangage et le roulis.

De plus grâce à la résonance du système, ce mécanisme permet d'annuler la dépense d'énergie nécessaire à l'inversion de la vitesse angulaire de l'aile dont l'inertie est non négligeable. Toute la puissance délivrée par le moteur peut être ainsi utilisée pour compenser l'amortissement du mouvement généré par les forces aérodynamiques.

Cependant dans ces mécanismes seulement 10% de la puissance maximale du moteur employé peut être utilisée. Notamment lors du battement des ailes, la puissance mécanique utile du moteur à ce point de fonctionnement est égale à environ 10% de la puissance maximale de ce moteur lorsqu'il est alimenté à la puissance électrique pour laquelle il est conçu.

Ce type de mécanisme est donc inadapté à des battements de grande amplitude. En effet, pour obtenir de tels mouvements avec des moteurs fonctionnant à 10% de leur puissance maximale, il serait nécessaire d'avoir recours à des moteurs de grande taille, qui grèveraient ainsi fortement la maniabilité des drones les comportant, voire seraient surdimensionnés par rapport à la taille du drone.

Le document US2014/061379 A1, divulgue un microdrone alimenté par un courant alternatif, dans lequel les hampes des ailes sont directement reliées à l'arbre de transmission du moteur. Les ailes battent à la fréquence de résonnance du système et le moteur est également sous-alimenté lors du fonctionnement du drone.

Le document US2013/320133A1 divulgue un microdrone dont les ailes battent à la fréquence de résonnance mais en courant continu. Il comprend un mécanisme de réduction de vitesse entre le moteur et les ailes, la vitesse de rotation transmise aux ailes étant réduite par rapport à la vitesse de rotation de ce moteur.

### Résumé de l'invention

Le problème technique que vise à résoudre l'invention est donc d'obtenir des dispositifs aptes à se mouvoir dans un milieu fluide par un mouvement alternatif d'organes battants, simples de réalisation et très maniables.

A cet effet, un premier objet de l'invention est un dispositif motorisé apte à se mouvoir dans un milieu fluide, ce dispositif comprenant un ou plusieurs systèmes locomoteurs, le ou chacun desdits systèmes locomoteurs comprenant une partie dite non mobile et une partie mobile apte à réaliser au moins un mouvement alternatif par rapport à la partie non mobile et reliée à cette partie non mobile par au moins un moyen élastique, la partie mobile comprenant au moins un ensemble d'entraînement relié à au moins un moteur du ou desdits systèmes locomoteurs et au moins un organe de locomotion relié à au moins un ensemble d'entraînement de sorte qu'un mouvement alternatif de l'ensemble d'entrainement entraîne un mouvement alternatif de cet organe de locomotion. Dans ce dispositif :
- le au moins un moyen élastique est précontraint, le niveau de précontrainte étant suffisant pour que la contrainte du moyen élastique ne change pas de signe lors du mouvement alternatif de la partie mobile ;
- l'ensemble d'entraînement comprend au moins un réducteur de vitesse de rotation du au moins un moteur, le réducteur étant adapté de manière à ce que lorsque le moteur fonctionne à sa puissance mécanique maximale, la vitesse de rotation transmise à l'au moins un organe de locomotion soit réduite par rapport à la vitesse de rotation dudit moteur de manière à correspondre à la vitesse de rotation conférant au mouvement alternatif dudit au moins un organe de locomotion une fréquence correspondant à ladite fréquence de résonance ;
- selon l'invention, le au moins un moteur est commandé par une tension électrique sinusoïdale, dont la fréquence correspond à la fréquence de résonance de ladite partie mobile reliée à ladite partie non mobile par ledit au moins un moyen élastique de manière à ce que d'une part, la fréquence du mouvement alternatif de l'ensemble d'entraînement soit sensiblement égale à la fréquence de résonance de la partie mobile reliée à la partie non mobile par le au moins un moyen élastique et que d'autre part, l'amplitude instantanée du mouvement alternatif de l'ensemble d'entraînement soit ajustée de sorte à commander la position moyenne et l'amplitude maximale du mouvement alternatif du au moins un organe de locomotion.

Ainsi ce dispositif étant un système résonnant, il en conserve les avantages à savoir qu'il utilise toute la puissance délivrée par le moteur pour compenser l'amortissement du mouvement généré par les forces de frottement du fluide.

Par ailleurs, il permet d'optimiser l'utilisation de la puissance que le moteur est capable de fournir. En particulier grâce au réducteur, la vitesse de rotation au niveau du réducteur est diminuée comparée à la vitesse de rotation du moteur, de ce fait le réducteur, et donc l'ensemble d'entrainement, transmet une vitesse angulaire à l'organe de locomotion plus faible. De ce fait, pour une amplitude donnée, le mouvement alternatif transmis à l'organe de locomotion par l'ensemble d'entrainement a une fréquence plus basse que si l'organe de locomotion était directement entrainé par le moteur. Ainsi, ce réducteur permet que la fréquence du mouvement alternatif de l'ensemble d'entraînement transmise à l'organe de locomotion corresponde à la fréquence de résonance de la partie mobile sans diminuer la vitesse de rotation directement en sortie du moteur. Par conséquent, il n'est plus nécessaire de sous-alimenter ce moteur. Ainsi le réducteur est agencé pour que lorsque le moteur tourne à sa puissance mécanique maximale, le mouvement alternatif de l'ensemble d'entrainement atteigne la fréquence de résonance de la partie mobile. De ce fait, ce dispositif est entrainé par un système résonnant tout en étant puissant.

Notamment, on pourra utiliser des moteurs de petite taille, qui malgré cela auront la puissance requise pour faire voler des dispositifs, notamment des drones, de quelques dizaines de centimètres. Ces dispositifs pourront avoir des capacités d'accélération élevées.

De plus, les organes de locomotion auront un mouvement alternatif dont l'amplitude maximale pourra être fixée par commande de la tension électrique. Cela permet ainsi de régler la portance du dispositif. En particulier, l'amplitude maximale du mouvement alternatif peut être fixée à une valeur suffisante pour permettre la sustentation du dispositif dans le fluide, par exemple un vol stationnaire dans l'air, tout en restant à la fréquence de résonance du système.

Par ailleurs, la tension électrique permet également de commander la position moyenne du mouvement alternatif du au moins un organe de locomotion. Ce faisant, elle permettra de contrôler la position moyenne du mouvement alternatif de l'organe de locomotion vers l'avant, au milieu ou vers l'arrière du dispositif motorisé. Elle permet donc de contrôler le tangage du dispositif motorisé.

Avec un seul actionneur, il est donc possible de régler la portance et le tangage de du dispositif motorisé.

L'amplitude instantanée est définie comme la position à un instant donné par rapport à la position moyenne au cours d'un mouvement alternatif, par exemple de l'organe de locomotion, ou comme la valeur de la tension électrique à un instant donné. L'amplitude maximale est définie comme la valeur absolue de la position de l'organe de locomotion la plus écartée de la position moyenne du mouvement alternatif, ou comme la valeur absolue maximale de la tension électrique.

Selon l'invention, dans ce dispositif, la tension électrique étant une tension sinusoïdale, dont la fréquence correspond à la fréquence de résonance de ladite partie mobile reliée à ladite partie non mobile par ledit au moins un moyen élastique, cela permet de générer efficacement un mouvement alternatif des organes de locomotion, dont les paramètres seront pilotés facilement par modification de ceux de cette tension électrique, notamment sa fréquence, son amplitude maximale, et son amplitude moyenne.

Le dispositif selon l'invention peut optionnellement présenter une ou plusieurs des caractéristiques suivantes :
- il comprend deux systèmes locomoteurs, le dispositif motorisé comprenant des moyens de commande permettant d'envoyer et régler lesdites tensions électriques indépendamment l'une de l'autre pour chacun des systèmes locomoteurs, de manière à ce que ces tensions électriques soient telles que l'amplitude instantanée dudit mouvement alternatif dudit ensemble d'entraînement de chacun desdits systèmes locomoteurs puisse être ajustée indépendamment, de sorte à commander la position moyenne et l'amplitude maximale du mouvement alternatif d'un au moins un organe de locomotion de l'un des systèmes locomoteurs indépendamment de la position moyenne et de l'amplitude maximale du mouvement alternatif d'un au moins un organe de locomotion de l'autre des systèmes locomoteurs ; ainsi le dispositif motorisé est pilotable par rapport à son axe de roulis ;
- chaque système locomoteur comprend deux moyens élastiques agencés de manière à ce que lorsque l'organe de locomotion se déplace dans un sens lors de son mouvement alternatif, la contrainte de l'un des moyens élastiques augmente et la contrainte de l'autre diminue, et inversement lorsque l'organe de locomotion se déplace dans l'autre sens lors de son mouvement alternatif; cela permet d'accumuler une énergie potentielle, celle de l'élément élastique dont la contrainte augmente, dans les deux sens du mouvement alternatif ;
- dans le cas de l'option de l'alinéa précédent, pour chaque système locomoteur l'un des moyens élastique est agencé au-dessus du réducteur et l'autre moyen élastique est agencé au-dessous du réducteur, le moteur du système locomoteur correspondant étant agencé au-dessous du réducteur ;
- pour chaque système locomoteur les deux moyens élastiques sont agencés au-dessus du réducteur, le moteur du système locomoteur correspondant étant agencé au-dessous du réducteur ; ainsi en ayant les moyens élastiques d'un côté du réducteur et le moteur de l'autre, on bénéficie de plus de place pour le moteur, permettant ainsi d'avoir un moteur plus volumineux ;
- le ou les moyens élastiques sont des ressorts à spires, notamment non jointives ; les ressorts à spires sont des moyens simples et efficaces pour réaliser un système résonnant ; de plus, le ressort à spires peut être agencé entre la partie mobile et la partie non mobile de manière à être toujours en contrainte de torsion, sa torsion augmentant ou diminuant selon le sens du mouvement alternatif; les ressort à spires dans ce cas est particulièrement approprié à l'invention ; de plus lorsque les spires sont non jointives, il y a moins de dissipation par frottement et la durée de vie des ressorts est augmentée ;
- le ou les moteurs sont des moteurs électriques sans noyaux ; offrent des capacités d'accélérations très importantes et ont une durée de vie supérieure à celle des moteurs à courant continu classiques en raison de l'absence de noyau métallique et des faibles inductances qui en résultent ; de plus, ces moteurs sont peu encombrants ; ces moteurs peuvent en particulier être utilisés dans des réalisations où, comme précédemment décrit, les moyens élastiques sont disposés au-dessus et au-dessous du réducteur ;
- dans le cas de ces moteurs sans noyaux, la tension électrique peut être commandée par une commande à découpage, notamment avec un pont dit « en H » pour chaque moteur ;
- au lieu d'être des moteurs sans noyaux, le ou les moteurs sont des moteurs électriques sans balais ; ces moteurs sont dotés de plusieurs paires de pôles, qui permettent de délivrer un couple élevé à basse vitesse ; de plus, ces moteurs peuvent être mis en oeuvre dans le dispositif motorisé avec un réducteur de plus faible rapport, ce qui est favorable à la diminution des dimensions et des pertes mécaniques ; ces moteurs peuvent en particulier être utilisés dans des réalisations où, comme précédemment décrit, les moyens élastiques du ou des systèmes locomoteurs sont disposés au-dessus du réducteur correspondant ;
- dans le cas du ou des moteurs sans balais, chaque système motorisé comprend des capteurs de position du rotor du moteur du système motorisé correspondant et un module de contrôle ajustant ladite tension électrique en fonction de cette position ; cela permet un fonctionnement plus efficace du ou des moteurs ;
- le réducteur est un réducteur de vitesse à un seul étage ; cela permet une conception favorable à la diminution des dimensions et des pertes mécaniques ;
- le dispositif motorisé a une taille comprise entre 15 et 25 cm et/ou un poids compris entre 15 et 30 grammes ; ces dispositifs motorisés sont particulièrement adaptés pour des déplacements en milieu confiné ; le dispositif motorisé selon l'invention est particulièrement adapté à de telles dimensions et poids ;
- le réducteur est agencé de manière à ce que lorsque le moteur fonctionne à sa puissance mécanique maximale, à ladite fréquence de résonance, l'amplitude maximale est comprise entre 50 et 80 degrés par rapport à la position moyenne de l'organe de locomotion ; une telle amplitude est particulièrement adaptée au vol stationnaire ; le dispositif motorisé selon l'invention est particulièrement adapté à de telles amplitudes.

Un autre objet de l'invention est un procédé de pilotage d'un dispositif motorisé apte à se mouvoir dans un milieu fluide, le dispositif comprenant un ou plusieurs système locomoteurs, le ou chacun desdits systèmes locomoteurs comprenant une partie dite non mobile et une partie mobile apte à réaliser au moins un mouvement alternatif par rapport à la partie non mobile et reliée à cette partie non mobile par au moins un moyen élastique, la partie mobile comprenant au moins un ensemble d'entraînement relié à au moins un moteur du ou desdits systèmes locomoteurs et au moins un organe de locomotion relié à au moins un ensemble d'entraînement de sorte qu'un mouvement alternatif de l'ensemble entraîne un mouvement alternatif de cet organe de locomotion. Ce procédé présente également les caractéristiques suivantes :
- il comprend une commande du moteur ne faisant pas changer de signe la contrainte du moyen élastique lors du mouvement alternatif de la partie mobile ;
- la vitesse de rotation de au moins un moteur lorsqu'il fonctionne à sa puissance mécanique maximale étant transmise, par un réducteur compris dans l'ensemble d'entraînement, à l'au moins un organe de locomotion de manière à ce que la vitesse de rotation de ce dernier corresponde à la vitesse de rotation conférant au mouvement alternatif de l'au moins un organe de locomotion une fréquence correspondant à la fréquence de résonance ;
- la commande de au moins un moteur étant réalisée, selon l'invention, par une tension électrique sinusoïdale, dont la fréquence correspond à la fréquence de résonance de ladite partie mobile reliée à ladite partie non mobile par ledit au moins un moyen élastique, de manière à ce que d'une part, la fréquence de mouvement alternatif de l'ensemble d'entraînement soit sensiblement égale à la fréquence de résonance de la partie mobile reliée à la partie non mobile par ledit au moins un moyen élastique et que d'autre part, l'amplitude instantanée de mouvement alternatif de l'ensemble d'entraînement soit ajustée de sorte à commander la position moyenne et l'amplitude maximale du mouvement alternatif de au moins un organe de locomotion.

Le procédé confèrera au dispositif motorisé les mêmes avantages que précédemment décrits pour le premier objet de l'invention.

Ce procédé est notamment un procédé de pilotage d'un dispositif motorisé selon l'invention.

Le procédé de pilotage selon l'invention peut optionnellement présenter une ou plusieurs des caractéristiques suivantes :
- il comprend au moins une des étapes suivantes :
   o augmenter ou diminuer l'amplitude maximale de ladite tension électrique, de sorte que la portance du dispositif motorisé est respectivement augmentée ou diminuée ;
   o moduler la valeur moyenne de ladite tension électrique, de sorte que le dispositif motorisé, tangue vers l'avant ou vers l'arrière ou bien reste stable ;
- le dispositif comprend deux systèmes locomoteurs, les commandes électriques du au moins un moteur de chaque système locomoteur étant réalisées indépendamment pour chacun des systèmes locomoteurs, de manière à ce que ces tensions électriques soient telles que l'amplitude instantanée dudit mouvement alternatif dudit ensemble d'entraînement de chacun desdits systèmes motorisés soit ajustée indépendamment, de sorte à commander la position moyenne et l'amplitude maximale du mouvement alternatif d'un au moins un organe de locomotion de l'un des systèmes locomoteurs indépendamment de la position moyenne et de l'amplitude maximale du mouvement alternatif d'un au moins un organe de locomotion de l'autre des systèmes locomoteurs ;
- il comprend au moins l'étape de moduler indépendamment l'amplitude maximale de chacun des moteurs des systèmes locomoteurs de sorte que le dispositif motorisé présente un mouvement de roulis vers la droite ou vers la gauche.

Dans le dispositif motorisé et dans le procédé selon l'invention, l'organe de locomotion peut être une aile et le fluide l'air. Dans ce cas le dispositif motorisé est un objet volant.

Mais l'invention peut également s'appliquer à un dispositif motorisé nageant, l'organe de locomotion étant une nageoire et le fluide un liquide, tel que de l'eau. Le dispositif motorisé nageant peut ne comprendre qu'un système locomoteur, par exemple dans le cas d'un drone reproduisant les mouvements de la nageoire caudale d'un poisson ou d'un mammifère marin.

### Brève description des figures

D'autres caractéristiques et avantages de l'invention apparaîtront à la lecture de la description détaillée des exemples non limitatifs qui suivent, pour la compréhension de laquelle on se reportera aux dessins annexés, parmi lesquels :
- la figure 1 est une vue en perspective qui représente un système locomoteur d'un dispositif motorisé selon un premier mode de réalisation selon l'invention ;
- la figure 2 est une vue en perspective qui représente un dispositif motorisé selon un deuxième mode de réalisation selon l'invention ;
- la figure 3 est une vue en coupe de la figure 2 dans un plan vertical passant par les axes de pivotement des organes de locomotions ;
- la figure 4 est une vue en coupe de la figure 3 selon BB ;
- la figure 5 illustre des positions des organes de locomotion lors du pilotage du dispositif motorisé selon le premier ou le deuxième mode de réalisation du dispositif motorisé selon l'invention.

### Description détaillée d'un exemple de réalisation

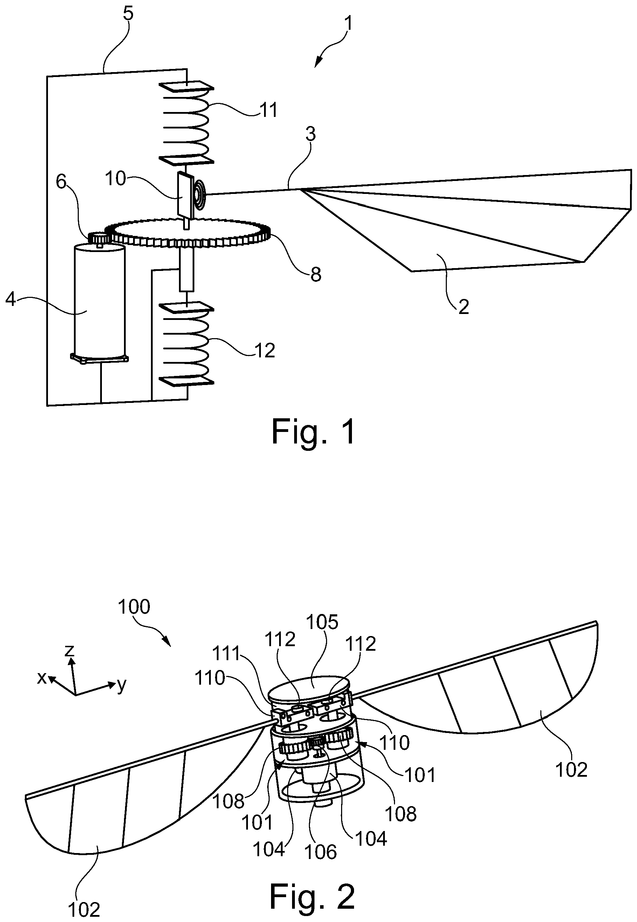

Selon un premier mode de réalisation, le dispositif motorisé est un microdrone volant, se mouvant dans l'air par le battement de deux ailes, formant les deux organes de locomotion. Sur la figure 1, seul un système locomoteur 1 est illustré. Le drone en comprend un deuxième symétrique à celui qui est illustré.

Chaque système locomoteur comprend une partie non mobile formée par le châssis du microdrone. Ici le châssis est représenté schématiquement par le trait référencé 5. Le châssis 5 est commun dans cet exemple au système locomoteur non représenté. Dans ce châssis est monté un moteur électrique 4, comprenant un rotor et un stator (non représentés). Le rotor de ce moteur entraîne indirectement en rotation un ensemble d'éléments formant une partie mobile par rapport au châssis 5.

Cette partie mobile comprend l'aile 2 et une pièce de maintien 10 de l'aile. Une commande (non représentée) du système locomoteur 1 commande le rotor du moteur 4 en un mouvement alternatif. De ce fait, le moteur 4 entraîne un battement des ailes 2.

Le moteur 4 peut par exemple être un moteur classiquement utilisé pour des applications de modèles réduits.

Selon l'invention, le moteur 4 entraîne l'aile 2, via un ensemble d'entrainement comprenant un réducteur de vitesse. Ce dernier est par exemple un réducteur de vitesse à un seul étage, formé par un pignon 6 et une roue dentée 8 d'un diamètre supérieur à celui du pignon 6. Le pignon 6 est directement entrainé en rotation par le rotor. La roue dentée 8 est engrenée avec le pignon 6, et leurs axes de rotation sont parallèles.

La pièce de maintien 10 est agencée au-dessus de la roue dentée 8, l'axe de rotation de ce dernier passant par cette pièce de maintien 10. La pièce de maintien 10 est fixée à la roue dentée 8 et est donc entrainée en rotation autour de l'axe de rotation de ce dernier.

L'aile 2 comprend une tige, un jonc 3 dans cet exemple, notamment un jonc 3 de carbone, formant le bord d'attaque de l'aile. La membrane de l'aile 2 s'étend le long de la plus grande partie de ce jonc 3. Ce jonc 3 est fixé dans la pièce de maintien 10, transversalement à l'axe de rotation de la roue dentée 8, notamment perpendiculairement, de manière à ce que l'axe de rotation de la roue dentée 8 soit également celui de l'aile 2. Cette dernière est donc entrainée dans un mouvement alternatif, correspondant à un battement de cette aile 2.

Un moyen élastique relie la partie mobile au châssis 5 via, un premier ressort 11 de torsion à spires non jointives, fixé dans cet exemple à la pièce de maintien 10. Un autre moyen élastique, notamment un deuxième ressort 12 de torsion à spires non jointives peut également être ajouté, comme illustré en figure 1.

Dans cet exemple, la pièce de maintien 10 et le premier moyen élastique 11 sont situés au-dessus du réducteur, et en particulier de la roue dentée 8. Le deuxième ressort 12 est au-dessous du réducteur, en particulier de la roue dentée 8. Notamment le deuxième ressort 12 est fixé d'un côté à la roue dentée et de l'autre au châssis 5.

Chacun de ces ressorts 11, 12, est monté en contrainte de manière à ce que cette contrainte ne change jamais de signe. Par exemple, les ressorts sont alignés sur l'axe de rotation de la roue dentée 8 et fixés au châssis 5 après rotation d'un quart de tour, de façon à rester chargés dans le sens de la fermeture des spires tout au long d'un cycle de battement.

Ils sont notamment agencés de part et d'autre du réducteur de manière à ce que lorsque la roue dentée 8 augmente la torsion du premier ressort 11, le deuxième ressort 12 libère l'énergie précédemment accumulée et sa contrainte en torsion diminue. Lors de cette phase du mouvement alternatif, la contrainte du deuxième ressort 12 ne passe pas par une valeur nulle. Lorsque le mouvement change de sens, la contrainte du deuxième ressort 12 est augmentée, forcée par le moteur et par la libération de l'énergie accumulée par le premier ressort 11.

L'utilisation de deux ressorts 11, 12, précontraints permet d'exercer un pré-chargement en torsion dans la position d'équilibre de l'aile 2, et par suite, de maintenir un chargement des ressorts dans le sens de la fermeture tout au long d'une période de battement. Cela permet de prolonger la conservation des caractéristiques de résistance mécanique des ressorts.

L'ensemble des ressorts 11 et 12 et l'aile 2 forment un système résonnant ayant sa fréquence de résonance propre. Selon l'invention, le moteur 4 est commandé pour que la fréquence du mouvement alternatif du pignon 6 soit identique à cette fréquence de résonance.

Le réducteur 6, 8, de vitesse permet de placer le moteur 4 à sa puissance maximale, où le régime moteur fonctionne de façon la plus efficace et avec le plus de puissance, et donc à une vitesse de rotation élevée, tout en ayant des battements d'aile 2 dont la fréquence correspond à la fréquence de résonance. Sans ce réducteur 6, 8, la fréquence de battement de l'aile 2 serait au-dessus de la fréquence de résonance.

La vitesse de rotation nominale des micromoteurs électriques standards utilisés est souvent par conception toujours très supérieure à la vitesse instantanée maximale résultant du mouvement de battement d'une aile. Le rapport de réduction est donc déterminé pour pouvoir disposer de la puissance mécanique maximale à la valeur efficace de la vitesse de rotation résultant du mouvement de battement.

Pour commander ce mouvement alternatif dans le cas d'un moteur sans noyau, la commande module la tension d'alimentation du moteur en une tension électrique sinusoïdale. L'amplitude instantanée correspond ainsi à l'amplitude instantanée du mouvement alternatif de l'aile 2. Le contrôle de l'amplitude maximale et de la valeur moyenne de cette tension électrique vont permettre le pilotage du microdrone, comme il sera ultérieurement expliqué.

Dans cet exemple, le moteur 4 est un moteur dit sans noyau, encore appelé « coreless ». Son rotor est dépourvu de fer, d'une masse de 2,6 grammes (g) et de 7 millimètres (mm) de diamètre. Sa vitesse de rotation à vide avoisine 40000 tours par minutes (tr/mn), ce qui est bien au-dessus de ce qu'il faut pour atteindre la fréquence de résonance de la partie mobile. Le moteur 4 est sous une tension d'alimentation continue de 3,7V. La génération de la tension électrique est par exemple assurée par une électronique de commande à découpage comportant un pont en H pour chacun des moteurs 4.

Le rapport du réducteur formé par le pignon 6 et la roue dentée 8 est de 8/70. Ce réducteur à fort rapport permet de décaler l'axe de l'aile 2 du rotor du moteur 4, compte tenu de la taille de la roue dentée 8. Il devient ainsi plus facile de disposer les ressorts 11 et 12 au-dessus et au-dessous du réducteur.

Les ressorts peuvent avoir un diamètre extérieur de 4 à 6, notamment 5 mm. Ce diamètre réduit contribue à une faible augmentation de l'inertie des éléments mobiles, et par suite, à un abaissement réduit de la fréquence de résonance du système mécanique.

L'aile 2 a une longueur de 75mm et le jonc de carbone un diamètre de 1mm. La membrane de l'aile est découpée dans un film polyester de 60µm d'épaisseur.

Cet exemple de systèmes locomoteurs 1 permet d'entretenir le battement des ailes du microdrone à une fréquence de 28 Hertz (Hz) avec des amplitudes maximales atteignant +/- 75°, sous une tension d'alimentation de 3,7 Volts (V).

Malgré sa faible masse, le moteur 4 sans noyau délivre une puissance significative. Outre ses capacités d'accélérations très importantes, il présente une durée de vie supérieure à celle des moteurs à courant continu classiques en raison de l'absence de noyau métallique et des faibles inductances qui en résultent.

Le stator interne des moteurs sans noyau n'est constitué que d'une seule paire de pôles ce qui conduit à des vitesses de rotation élevées. De ce fait, cela conduit à les privilégier pour des applications dans des drones de taille réduite nécessitant des fréquences de battement assez élevées, comme celui illustré.

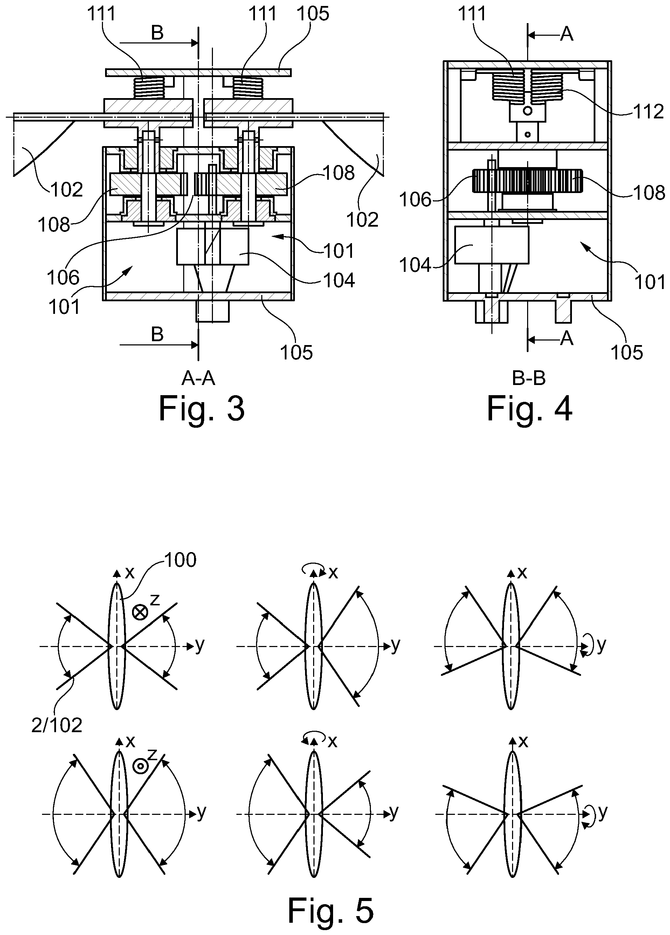

Un deuxième mode de réalisation est illustré aux figures 2 à 4. Il s'agit également d'un microdrone volant 100, se mouvant dans l'air par le battement de deux ailes 102. Sur les figures 2 et 3, les deux systèmes locomoteurs 101 sont visibles, alors qu'un seul est visible en figure 4. Celui-ci diffère du mode de réalisation précédent par les caractéristiques ci-après.

Dans ce mode de réalisation, le premier ressort 111 et le deuxième ressort 112, sont deux ressorts de torsion symétriques disposés au dessus du réducteur, formé par la roue dentée 108 et le pignon 106. Les deux ressorts 111 et 112 sont disposés côte à côte au dessus de la pièce de maintien 110 de l'aile 102 correspondante, de part et d'autre de l'axe de rotation de la pièce de maintien 110 de l'aile 102. L'absence de ressort disposé sous le réducteur 6, 8, permet l'utilisation de moteur nécessitant un plus faible rapport de réduction.

Ces ressorts 111 et 112 sont fixés en précontrainte d'un côté à cette pièce de maintien 110 et au châssis 105, de manière à ce qu'à la position d'équilibre de l'aile, ces deux ressorts soient préchargés, notamment d'un quart de tour, dans deux sens opposés.

Chacun des systèmes locomoteurs 101 comprend un moteur 104 sans balais (ou moteur « brushless ») à rotor externe, de 10 mm de diamètre dans cet exemple.

Les micromoteurs sans balais sont dotés de plusieurs paires de pôles, qui permettent de délivrer un couple élevé à basse vitesse. Par suite, ces moteurs peuvent être mis en oeuvre dans le mécanisme proposé avec un réducteur de plus faible rapport, ce qui est favorable à la diminution des dimensions et des pertes mécaniques.

Dans cet exemple, le réducteur 106, 108, présente un rapport de réduction de vitesse de 12/48, soit moins élevé que dans le premier mode de réalisation.

Les moteurs 104 sans balais peuvent être des moteurs triphasés de type synchrone à aimants permanents. Le système locomoteur 101 comprend une électronique de commande agencée pour permettre un changement périodique du sens rotation. Cette électronique de commande peut notamment comporter des capteurs qui permettent de déterminer la position du rotor à un instant donné.

L'inertie du rotor externe qui supporte des aimants et l'utilisation d'un réducteur conduisent à une inertie des éléments mobiles non négligeable, qui amène à privilégier ce type de moteur 104 pour des microdrones 100 de plus grande taille nécessitant des fréquences de battement moins élevée que dans le premier mode de réalisation

Les microdrones des premier et deuxième modes de réalisation sont pilotés par un procédé mettant en oeuvre la commande de la tension électrique sinusoïdale. Des mouvements basiques résultant de la mise en oeuvre de ce procédé sont illustrés en figure 5.

La commande en mouvement alternatif du moteur 4 ou 104 est obtenue par une alimentation par une tension sinusoïdale. La fréquence de cette tension électrique est ajustée à une valeur proche de la fréquence de résonance du système mécanique, réalisant ainsi une commande en régime forcé du système résonnant.

L'ajustement de l'amplitude instantanée de la tension sinusoïdale appliquée au moteur 4 ou 104 permet le contrôle de l'amplitude instantanée du battement de l'aile du système locomoteur 1 ou 101 correspondant, sans modification de la fréquence de battement à la différence des systèmes bielle-manivelle. Sur la figure 5 à gauche, l'amplitude maximale de la tension électrique a été augmentée entre le dessin du haut et celui du bas, ce qui s'est traduit par une augmentation de l'amplitude maximale du battement de l'aile autour de la position moyenne du mouvement. La portance du microdrone est ainsi augmentée.

Les tensions électriques envoyées aux moteurs 4 ou 104 des deux systèmes locomoteurs 1 ou 101, sont en phase, d'amplitude maximale et de valeur moyenne égale. Chaque aile 2 ou 102 bat donc avec la même amplitude maximale et avec la même position moyenne. Le microdrone ne présente donc pas d'angle de tangage, ni d'angle de roulis.

Pour générer un tangage vers l'avant ou l'arrière du microdrone, le procédé de pilotage permet l'introduction d'une composante continue décalant la valeur moyenne de cette tension électrique sinusoïdale, permettant de déplacer vers l'avant ou vers l'arrière la position moyenne de l'aile 2 ou 102 au cours de son battement. C'est le cas sur la figure 5 à droite, où dans le dessin du haut, l'introduction d'une composante positive entraîne le décalage vers l'avant de la position moyenne des ailes 2, 102, et donc un tangage vers l'arrière, alors que dans le dessin du bas l'introduction d'une composante négative entraîne un tangage vers l'avant.

La génération d'un moment de roulis est obtenue, comme illustrée par les dessins du centre en figure 5, par l'alimentation des moteurs des systèmes locomoteurs avec des tensions électriques synchronisées à la même fréquence, présentant la même valeur moyenne, mais avec des amplitudes maximales différentes. Ainsi, les amplitudes maximales de battement ne sont plus symétriques et par suite commandent un couple de roulis. De ce fait, on peut conférer au microdrone un mouvement vers la gauche (dessin du centre en haut) ou vers la droite (dessin du centre en bas).

## Revendications

1. Dispositif motorisé apte à se mouvoir dans un milieu fluide, ledit dispositif comprenant un ou plusieurs systèmes locomoteurs (1 ; 101), le ou chacun desdits systèmes locomoteurs comprenant une partie dite non mobile et une partie mobile apte à réaliser au moins un mouvement alternatif par rapport à ladite partie non mobile et reliée à cette partie non mobile par au moins un moyen élastique (11, 12 ; 111, 112), ladite partie mobile comprenant au moins un ensemble d'entraînement relié à au moins un moteur (4; 104) dudit ou desdits systèmes locomoteurs et au moins un organe de locomotion (2 ; 102) relié à au moins un ensemble d'entraînement de sorte qu'un mouvement alternatif dudit ensemble entraîne un mouvement alternatif de cet organe de locomotion, dans ce dit dispositif :
- ledit au moins un moyen élastique étant précontraint, le niveau de précontrainte étant suffisant pour que la contrainte dudit moyen élastique ne change pas de signe lors dudit mouvement alternatif de ladite partie mobile ;
- ledit ensemble d'entraînement comprenant au moins un réducteur (6 et 8 ; 106 et 108) de vitesse de rotation dudit au moins un moteur, ledit réducteur étant adapté de manière à ce que lorsque ledit moteur fonctionne à sa puissance mécanique maximale, la vitesse de rotation transmise audit au moins un organe de locomotion soit réduite par rapport à la vitesse de rotation dudit moteur de manière à correspondre à la vitesse de rotation conférant au mouvement alternatif dudit au moins un organe de locomotion une fréquence correspondant à ladite fréquence de résonance ;
ledit dispositif étant **caractérisé en ce que** :
- ledit au moins un moteur est commandé par une tension électrique sinusoïdale, dont la fréquence correspond à la fréquence de résonance de ladite partie mobile reliée à ladite partie non mobile par ledit au moins un moyen élastique (2; 102) de manière à ce que d'une part, la fréquence dudit mouvement alternatif dudit ensemble d'entraînement soit sensiblement égale à la fréquence de résonance de ladite partie mobile reliée à ladite partie non mobile par ledit au moins un moyen élastique et que d'autre part, l'amplitude instantanée dudit mouvement alternatif dudit ensemble d'entraînement soit ajustée de sorte à commander la position moyenne et l'amplitude maximale du mouvement alternatif dudit au moins un organe de locomotion.

2. Dispositif selon la revendication 1, **caractérisé en ce que** le dispositif comprend deux systèmes locomoteurs (1 ; 101), le dispositif motorisé comprenant des moyens de commande permettant d'envoyer et régler lesdites tensions électriques indépendamment l'une de l'autre pour chacun des systèmes locomoteurs, de manière à ce que ces tensions électriques soient telles que l'amplitude instantanée dudit mouvement alternatif dudit ensemble d'entraînement de l'un desdits systèmes locomoteurs puisse être ajustée indépendamment de celle de l'autre desdits systèmes locomoteurs, de sorte à commander la position moyenne et l'amplitude maximale du mouvement alternatif d'un au moins un organe de locomotion (2 ; 102) de l'un des systèmes locomoteurs indépendamment de la position moyenne et de l'amplitude maximale du mouvement alternatif d'un au moins un organe de locomotion (2 ; 102) de l'autre des systèmes locomoteurs.

3. Dispositif selon l'une des revendications précédentes, **caractérisé en ce que** chaque système locomoteur (1 ; 101) comprend deux moyens élastiques (11, 12 ; 111, 112) agencés de manière à ce que lorsque l'organe de locomotion (2 ; 102) se déplace dans un sens lors de son mouvement alternatif, la contrainte de l'un des moyens élastique augmente et la contrainte de l'autre diminue, et inversement lorsque l'organe de locomotion se déplace dans l'autre sens lors de son mouvement alternatif.

4. Dispositif selon l'une des revendications précédentes, **caractérisé en ce que** le ou les moyens élastiques sont des ressorts (11, 12 ; 111, 112) à spires non jointives.

5. Dispositif selon l'une des revendications précédentes, **caractérisé en ce que** le ou les moteurs (4) sont des moteurs électriques sans noyaux.

6. Dispositif selon l'une des revendications 1 à 4, **caractérisé en ce que** le ou les moteurs (104) sont des moteurs électriques sans balais.

7. Dispositif selon l'une des revendications précédentes, **caractérisé en ce que** le réducteur (6 et 8 ; 106 et 108) est un réducteur de vitesse à un seul étage.

8. Dispositif selon l'une des revendications précédentes, **caractérisé en ce que** le dispositif motorisé a une taille comprise entre 15 et 25 cm et/ou un poids compris entre 15 et 30 grammes.

9. Procédé de pilotage d'un dispositif motorisé apte à se mouvoir dans un milieu fluide, le dispositif comprenant un ou plusieurs système locomoteurs (1 ; 101), le ou chacun desdits systèmes locomoteurs comprenant une partie dite non mobile et une partie mobile apte à réaliser au moins un mouvement alternatif par rapport à ladite partie non mobile et reliée à cette partie non mobile par au moins un moyen élastique (11, 12; 111, 112), ladite partie mobile comprenant au moins un ensemble d'entraînement relié à au moins un moteur dudit ou desdits systèmes locomoteurs et au moins un organe de locomotion (2 ; 102) relié à au moins un ensemble d'entraînement de sorte qu'un mouvement alternatif dudit ensemble entraîne un mouvement alternatif de cet organe de locomotion, dans ce dit procédé :
- est comprise une commande dudit moteur (4; 104) ne faisant pas changer de signe la contrainte dudit moyen élastique lors dudit mouvement alternatif de ladite partie mobile ;
- la vitesse de rotation dudit au moins un moteur lorsqu'il fonctionne à sa puissance mécanique maximale étant transmise, par un réducteur (6 et 8; 106 et 108) compris dans ledit ensemble d'entraînement, audit au moins un organe de locomotion de manière à ce que la vitesse de rotation de ce dernier corresponde à la vitesse de rotation conférant au mouvement alternatif dudit au moins un organe de locomotion une fréquence correspondant à ladite fréquence de résonance ;
ledit procédé étant **caractérisé en ce que** :
- la commande dudit au moins un moteur est réalisée par une tension électrique sinusoïdale, dont la fréquence correspond à la fréquence de résonance de ladite partie mobile reliée à ladite partie non mobile par ledit au moins un moyen élastique (2 ; 102), de manière à ce que d'une part, la fréquence dudit mouvement alternatif dudit ensemble d'entraînement soit sensiblement égale à la fréquence de résonance de ladite partie mobile reliée à ladite partie non mobile par ledit au moins un moyen élastique et que d'autre part, l'amplitude instantanée dudit mouvement alternatif dudit ensemble d'entraînement soit ajustée de sorte à commander la position moyenne et l'amplitude maximale du mouvement alternatif dudit au moins un organe de locomotion.

10. Procédé selon la revendication 9, **caractérisé en ce que** le procédé est un procédé de pilotage d'un dispositif selon l'une des revendications 1 à 8.

## Patentansprüche

1. Motorisierte Vorrichtung, die imstande ist, sich in einem fluiden Milieu fortzubewegen, wobei die Vorrichtung ein oder mehrere Fortbewegungssysteme (1; 101) umfasst, wobei das oder jedes der Fortbewegungssysteme einen sogenannten nicht beweglichen Teil und einen beweglichen Teil umfasst, der imstande ist, mindestens eine Hin- und Herbewegung in Bezug auf den nicht beweglichen Teil durchzuführen und mit diesem nicht beweglichen Teil durch mindestens ein elastisches Mittel (11, 12; 111, 112) verbunden ist, wobei der beweglichen Teil mindestens eine Antriebseinheit umfasst, die mit mindestens einem Motor (4; 104) des oder der Fortbewegungssysteme verbunden ist, und mindestens ein Fortbewegungsorgan (2; 102), das mit mindestens einer Antriebseinheit derart verbunden ist, dass eine Hin- und Herbewegung der Einheit eine Hin- und Herbewegung dieses Fortbewegungsorgans bewirkt, wobei in dieser Vorrichtung:
- das mindestens eine elastische Mittel vorgespannt ist, wobei das Vorspannungsniveau ausreichend ist, damit die Spannung des elastischen Mittels bei der Hin- und Herbewegung des beweglichen Teils nicht das Vorzeichen ändert;
- die Antriebseinheit mindestens einen Rotationsgeschwindigkeitsbegrenzer (6 und 8; 106 und 108) des mindestens einen Motors umfasst, wobei der Begrenzer derart angepasst ist, dass, wenn der Motor mit seiner maximalen mechanischen Leistung arbeitet, die an das mindestens eine Fortbewegungsorgan übertragene Rotationsgeschwindigkeit in Bezug auf die Rotationsgeschwindigkeit des Motors derart reduziert wird, dass sie der Rotationsgeschwindigkeit entspricht, die der Hin- und Herbewegung des mindestens einen Fortbewegungsorgan eine Frequenz verleiht, die der Resonanzfrequenz entspricht;
wobei die Vorrichtung **dadurch gekennzeichnet ist, dass**:
- der mindestens eine Motor von einer elektrischen Sinusspannung gesteuert wird, deren Frequenz der Resonanzfrequenz des beweglichen Teils entspricht, der mit dem nicht beweglichen Teil durch das mindestens eine elastische Mittel (2; 102) derart verbunden ist, dass zum einen die Frequenz der Hin- und Herbewegung der Antriebseinheit im Wesentlichen gleich der Resonanzfrequenz des beweglichen Teils ist, der mit dem nicht beweglichen Teil durch das mindestens eine elastische Mittel verbunden ist und zum anderen die Momentanamplitude der Hin- und Herbewegung der Antriebseinheit derart eingestellt ist, dass die mittlere Position und die maximale Amplitude der Hin- und Herbewegung des mindestens einen Fortbewegungsorgans gesteuert werden.

2. Vorrichtung nach Anspruch 1, **dadurch gekennzeichnet, dass** die Vorrichtung zwei Fortbewegungssysteme (1; 101) umfasst, wobei die motorisierte Vorrichtung Steuermittel umfasst, die gestatten, die elektrischen Spannungen unabhängig voneinander für jedes der Fortbewegungssysteme derart zu senden und zu regeln, dass diese elektrischen Spannungen derart sind, dass die Momentanamplitude der Hin- und Herbewegung der Antriebseinheit von einem der Fortbewegungssysteme unabhängig von der des anderen der Fortbewegungssysteme derart einstellbar ist, dass die mittlere Position und die maximale Amplitude der Hin- und Herbewegung von mindestens einem Fortbewegungsorgan (2; 102) von einem der Fortbewegungssysteme unabhängig von der mittleren Position und der maximalen Amplitude der Hin- und Herbewegung von mindestens einem Fortbewegungsorgan (2; 102) des anderen der Fortbewegungssysteme gesteuert wird.

3. Vorrichtung nach einem der vorangehenden Ansprüche, **dadurch gekennzeichnet, dass** jedes Fortbewegungssystem (1; 101) zwei elastische Mittel (11, 12; 111, 112) umfasst, die derart eingerichtet sind, dass, wenn sich das Fortbewegungsorgan (2; 102) während seiner Hin- und Herbewegung in eine Richtung verlagert, die Spannung von einem der elastischen Mittel zunimmt und die Spannung des anderen abnimmt und umgekehrt, wenn sich das Fortbewegungsorgan während seiner Hin- und Herbewegung in die andere Richtung verlagert.

4. Vorrichtung nach einem der vorangehenden Ansprüche, **dadurch gekennzeichnet, dass** das oder die elastischen Mittel Federn (11, 12; 111, 112) mit nicht anliegenden Windungen sind.

5. Vorrichtung nach einem der vorangehenden Ansprüche, **dadurch gekennzeichnet, dass** der oder die Motoren (4) Elektromotoren ohne Kerne sind.

6. Vorrichtung nach einem der Ansprüche 1 bis 4, **dadurch gekennzeichnet, dass** der oder die Motoren (104) Elektromotoren ohne Bürsten sind.

7. Vorrichtung nach einem der vorangehenden Ansprüche, **dadurch gekennzeichnet, dass** der Begrenzer (6 und 8; 106 und 108) ein einstufiger Geschwindigkeitsbegrenzer ist.

8. Vorrichtung nach einem der vorangehenden Ansprüche, **dadurch gekennzeichnet, dass** die motorisierte Vorrichtung eine Größe hat, die zwischen 15 und 25 cm liegt und/oder ein Gewicht, das zwischen 15 und 30 Gramm liegt.

9. Verfahren zur Steuerung einer motorisierten Vorrichtung, die imstande ist, sich in einem fluiden Milieu fortzubewegen, wobei die Vorrichtung ein oder mehrere Fortbewegungssysteme (1; 101) umfasst, wobei das oder jedes der Fortbewegungssysteme einen sogenannten nicht beweglichen Teil und einen beweglichen Teil umfasst, der imstande ist, mindestens eine Hin- und Herbewegung in Bezug auf den nicht beweglichen Teil durchzuführen und mit diesem nicht beweglichen Teil durch mindestens ein elastisches Mittel (11, 12; 111, 112) verbunden ist, wobei der beweglichen Teil mindestens eine Antriebseinheit umfasst, die mit mindestens einem Motor des oder der Fortbewegungssysteme verbunden ist, und mindestens ein Fortbewegungsorgan (2; 102), das mit mindestens einer Antriebseinheit derart verbunden ist, dass eine Hin- und Herbewegung der Einheit eine Hin- und Herbewegung dieses Fortbewegungsorgans bewirkt,
wobei in diesem Verfahren:
- eine Steuerung des Motors (4; 104) inbegriffen ist, die keine Änderung des Vorzeichens der Spannung des elastischen Mittels während der Hin- und Herbewegung des beweglichen Teils bewirkt;
- die Rotationsgeschwindigkeit des mindestens einen Motors, wenn er mit seiner maximalen mechanischen Leistung arbeitet, von einem Begrenzer (6 und 8; 106 und 108), der Teil der Antriebseinheit ist, an das mindestens eine Fortbewegungsorgan derart übertragen wird, dass die Rotationsgeschwindigkeit desselben der Rotationsgeschwindigkeit entspricht, die der Hin- und Herbewegung des mindestens einen Fortbewegungsorgans eine Frequenz verleiht, die der Resonanzfrequenz entspricht;
wobei das Verfahren **dadurch gekennzeichnet ist, dass**:
- die Steuerung des mindestens einen Motors durch eine elektrische Sinusspannung erfolgt, deren Frequenz der Resonanzfrequenz des beweglichen Teils entspricht, der mit dem nicht beweglichen Teil durch das mindestens eine elastische Mittel (2; 102) derart verbunden ist, dass zum einen die Frequenz der Hin- und Herbewegung der Antriebseinheit im Wesentlichen gleich der Resonanzfrequenz des beweglichen Teils ist, der mit dem nicht beweglichen Teil durch das mindestens eine elastische Mittel verbunden ist und zum anderen die Momentanamplitude der Hin- und Herbewegung der Antriebseinheit derart eingestellt ist, dass die mittlere Position und die maximale Amplitude der Hin- und Herbewegung des mindestens einen Fortbewegungsorgans gesteuert werden.

10. Verfahren nach Anspruch 9, **dadurch gekennzeichnet, dass** das Verfahren ein Steuerungsverfahren einer Vorrichtung nach einem der Ansprüche 1 bis 8 ist.

## Claims

1. A motorized device capable of moving in a fluid medium, said device comprising one or more locomotor systems (1; 101), the or each of said locomotor systems comprising a portion referred to as the non-movable portion and a movable portion that is capable of carrying out at least one reciprocating motion with respect to said non-movable portion and is linked to said non-movable portion by means of at least one elastic means (11, 12; 111, 112), said movable portion comprising at least one drive assembly that is linked to at least one motor (4; 104) of said one or more locomotor systems and at least one locomotion member (2; 102) that is linked to at least one drive assembly such that a reciprocating motion of said assembly drives a reciprocating motion of said locomotion member, in this said device:
- said at least one elastic means being prestrained, the level of prestrain being sufficient such that the strain on said elastic means does not change sign during said reciprocating motion of said movable portion;
- said drive assembly comprises at least one speed reducer (6 and 8; 106 and 108) for reducing the speed of rotation of said at least one motor, said reducer being designed so that when said motor is operating at its maximum mechanical power, the speed of rotation transmitted to said at least one locomotion member is reduced with respect to the speed of rotation of said motor so as to match the speed of rotation conferring a frequency corresponding to said resonant frequency to the reciprocating motion of said at least one locomotion member;
said device being **characterized in that**:
- said at least one motor is controlled by a sinusoidal voltage, the frequency of which corresponds to the resonant frequency of said movable portion that is linked to said non-movable portion by said at least one elastic means (2; 102) so that, on the one hand, the frequency of said reciprocating motion of said drive assembly is substantially equal to the resonant frequency of said movable portion that is linked to said non-movable portion by said at least one elastic means and, on the other hand, the instantaneous amplitude of said reciprocating motion of said drive assembly is adjusted so as to control the average position and the maximum amplitude of the reciprocating motion of said at least one locomotion member.

2. The device as claimed in claim 1, **characterized in that** the device comprises two locomotor systems (1; 101), the motorized device comprising control means for sending and adjusting said voltages independently of one another for each of the locomotor systems, so that these voltages are such that the instantaneous amplitude of said reciprocating motion of said drive assembly of one of said locomotor systems may be adjusted independently of that of the other of said locomotor systems, so as to control the average position and the maximum amplitude of the reciprocating motion of an at least one locomotion member (2; 102) of one of the locomotor systems independently of the average position and the maximum amplitude of the reciprocating motion of an at least one locomotion member (2; 102) of the other of the locomotor systems.

3. The device as claimed in one of the preceding claims, **characterized in that** each locomotor system (1; 101) comprises two elastic means (11, 12; 111, 112) that are arranged so that when the locomotion member (2; 102) moves in one direction during its reciprocating motion, the strain on one of the elastic means increases and the strain on the other decreases, and vice versa when the locomotion member moves in the other direction during its reciprocating motion.

4. The device as claimed in one of the preceding claims, **characterized in that** the one or more elastic means are springs (11, 12; 111, 112) with non-contiguous turns.

5. The device as claimed in one of the preceding claims, **characterized in that** the one or more motors (4) are coreless electric motors.

6. The device as claimed in one of claims 1 to 4, **characterized in that** the one or more motors (104) are brushless electric motors.

7. The device as claimed in one of the preceding claims, **characterized in that** the reducer (6 and 8; 106 and 108) is a single-stage speed reducer.

8. The device as claimed in one of the preceding claims, **characterized in that** the size of the motorized device is comprised between 15 and 25 cm and/or the weight thereof is comprised between 15 and 30 grams.

9. A method for controlling a motorized device capable of moving in a fluid medium, the device comprising one or more locomotor systems (1; 101), the or each of said locomotor systems comprising a portion referred to as the non-movable portion and a movable portion that is capable of carrying out at least one reciprocating motion with respect to said non-movable portion and is linked to said non-movable portion by means of at least one elastic means (11, 12; 111, 112), said movable portion comprising at least one drive assembly that is linked to at least one motor of said one or more locomotor systems and at least one locomotion member (2; 102) that is linked to at least one drive assembly such that a reciprocating motion of said assembly drives a reciprocating motion of said locomotion member, in this said method:
- is comprised a control of said motor (4; 104) that does not change the sign of the strain on said elastic means during said reciprocating motion of said movable portion;
- the speed of rotation of said at least one motor, when it is operating at its maximum mechanical power, is transmitted, by a reducer (6 and 8; 106 and 108) comprised within said drive assembly, to said at least one locomotion member so that the speed of rotation of the latter matches the speed of rotation conferring a frequency corresponding to said resonant frequency to the reciprocating motion of said at least one locomotion member;
said method being **characterized in that**:
- the control of said at least one motor is achieved by means of a sinusoidal voltage, the frequency of which corresponds to the resonant frequency of said movable portion that is linked to said non-movable portion by said at least one elastic means (2; 102) so that, on the one hand, the frequency of said reciprocating motion of said drive assembly is substantially equal to the resonant frequency of said movable portion that is linked to said non-movable portion by said at least one elastic means and, on the other hand, the instantaneous amplitude of said reciprocating motion of said drive assembly is adjusted so as to control the average position and the maximum amplitude of the reciprocating motion of said at least one locomotion member.

10. The method as claimed in claim 9, **characterized in that** the method is a method for controlling a device as claimed in one of claims 1 to 8.
